(19) Europäisches Patentamt

European Patent Office

Office européen des brevets

(11) EP 0 890 674 A2

(12) EUROPÄISCHE PATENTANMELDUNG

(43) Veröffentlichungstag:
13.01.1999 Patentblatt 1999/02

(51) Int. Cl.$^6$: **D21F 1/40**, D21G 1/02

(21) Anmeldenummer: 98108650.7

(22) Anmeldetag: 13.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 12.07.1997 DE 19729907

(71) Anmelder:
Voith Sulzer Papiermaschinen GmbH
89509 Heidenheim (DE)

(72) Erfinder:
Grabscheid, Joachim, Dr.
89547 Heuchlingen (DE)

(54) **Walze**

(57) Die Erfindung betrifft eine Walze, bestehend aus einem ausschließlich in einem axial mittleren Bereich (1) auf einem durchgehenden Walzenträger (2) zumindest in radialer Richtung abgestützten Walzenrohr (3), welches außerhalb dieses mittleren Bereiches (1) einen eine Biegung des Walzenrohres (2) relativ zum Walzenträger (3) erlaubenden Abstand zum Walzenträger (2) aufweist.

Ausgehend davon soll das Biegeverhalten derartiger Walzen verbessert werden.

Erreicht wird dies dadurch, daß sich die Steifigkeit des Walzenrohres (3) ausgehend von dem mittleren Bereich (1) zu den Enden des Walzenrohres (3) derart verringert, daß die Belastung durch das Eigengewicht des Walzenrohres (3) sowie die äußere Betriebsbelastung zu einer möglichst konstanten Krümmung der Biegelinie des Walzenrohres (3) führt.

Figur 1

**Beschreibung**

Die Erfindung betrifft eine Walze, bestehend aus einem ausschließlich in einem axial mittleren Bereich auf einem durchgehenden Walzenträger zumindest in radialer Richtung abgestützten Walzenrohr, welches außerhalb dieses mittleren Bereiches einen eine Biegung des Walzenrohres relativ zum Walzenträger erlaubenden Abstand zum Walzenträger aufweist.

Derartige Walzen finden insbesondere als Leitwalzen für Filze, Siebe, Tücher, Fasterstoffbahnen, Folien u. ä. Anwendung.

Über die Biegung des Walzenrohres soll dabei eine quer zur Bahnlaufrichtung wirkende Streckung oder Stauchung der die Walze teilweise umschlingenden Materialbahn erreicht werden. Die Art der Wirkung (Streckung oder Stauchung) hängt dabei von der Art der Biegung (konkav oder konvex) des umschlungenen Bereiches der Walze ab.

Walzen gemäß dem Oberbegriff des Anspruchs 1 sind in dem DE-Gbm 296 13 795 sowie der US-PS 48 56 159 beschrieben. Als Nachteil hat sich jedoch dabei erwiesen, daß die streckende oder stauchende Wirkung auf die Materialbahn zu den Enden des Walzenrohres hin abnimmt.

Aufgabe der Erfindung ist es daher, das Biegeverhalten derartiger Walzen zu verbessern.

Erfindungsgemäß wurde die Aufgabe dadurch gelöst, daß sich die Steifigkeit des Walzenrohres ausgehend von dem mitteleren Bereich zu den Enden des Walzenrohres derart verringert, daß die Belastung durch das Eigengewicht des Walzenrohres sowie die äußere Betriebsbelastung zu einer möglichst konstanten Krümmung der Biegelinie des Walzenrohres führt. Durch die möglichst konstante Krümmung der Biegelinie des Walzenrohres wird dabei auch eine Vergleichmäßigung der Wirkung auf die Materialbahn erreicht.

Die Steifigkeit des Walzenrohres kann dabei insbesondere über die Wandstärke des Walzenrohres beeinflußt werden. Je nach der Länge des Walzenrohres sowie der Steifigkeit des Rohrmaterials sollte sich die Wandstärke des Walzenrohres ausgehend vom Ende des mittleren Bereiches entweder bis zu den Enden des Walzenrohres oder aber zumindest in einem Übergangsbereich vorzugsweise kontinuierlich verringern. Nach dem Übergangsbereich sollte die Wandstärke bis zu den Enden des Walzenrohres möglichst konstant bleiben.

Eine besonders konstante Krümmung der Biegelinie ergibt sich dann, wenn die Wandstärke zwischen der maximalen Wandstärke am Ende des mittleren Bereiches und einer wegen der Festigkeit des Walzenrohres nicht zu unterschreitenden minimalen Wandstärke höchstens

$$\left( \frac{\text{Abstand zwischen dem zu betrachtenden Punkt mit der Wandstärke und dem Ende des Walzenrohres}}{\text{Abstand zwischen dem Ende des mittleren Bereiches und dem Ende des Walzenrohres}} \right)^{2} \text{ maximale Wandstärke}$$

ist.

Daneben ist die Beeinflussung der Steifigkeit des Walzenrohres aber auch über zusätzliche im Walzenrohr angeordnete Teile möglich. Dabei kann es sich beispielsweise um ein Stützgerüst handeln. Falls jedoch das Walzenrohr aus Kunststoff besteht, kann die Steifigkeit über den Umfang der in diesen Kunststoff eingebrachten Verstärkungen aus Fasern, Geweben o. ä. beeinflußt werden. In jedem Fall sollte der Grad der Verstärkung vom Ende des mittleren Bereiches zu den Enden des Walzenrohres hin abnehmen. Eine Kombination mit der Verringerung der Wandstärke zu den Enden hin kann dabei vorteilhaft sein.

Das Walzenrohr kann im mittleren Bereich rotierbar auf dem Walzenträger gelagert oder fest mit dem Walzenträger verbunden sein. Im letzteren Fall ist eine rotierbare Lagerung des Walzenträgers in einer Walzenstuhlung möglich.

Um einer Verschmutzung des Raumes zwischen dem Walzenrohr und dem Walzenträger außerhalb des mittleren Bereiches entgegenzuwirken ist es möglich, das Walzenrohr mit einer flexiblen Abdeckung zu versehen.

Nachfolgend soll die Erfindung an zwei Ausführungsbeispielen näher erläutert werden. In der beigefügten Zeichnung zeigt

Figur 1   eine Walze mit einer festen Verbindung zwischen Walzenrohr 3 und Walzenträger 2 und

Figur 2   eine Walze mit rotierbar gelagertem Walzenrohr 3.

Beiden Ausführungsbeispielen ist gemeinsam, daß die Walze aus einem ausschließlich in einem axial mittleren Bereich 1 auf einem durchgehenden Walzenträger 2 zumindest in radialer Richtung abgestützten Walzenrohr 3 besteht, welches außerhalb dieses mittleren Bereiches 1 einen eine Biegung des Walzenrohres 3 relativ zum Walzenträger 2 erlaubenden Abstand zum Walzenträger 2 aufweist. Dabei wird die Steifigkeit des Walzenrohres 3 ausgehend von dem mittleren Bereich 1 zu den Enden des Walzenrohres 3 derart verringert, daß die Belastung durch das Eigengewicht des Walzenrohres 3 sowie die äußere Betriebsbelastung zu einer möglichst konstanten Krümmung der Biegelinie des Walzenrohres 3 führt. Die äußere Belastung geht dabei im allgemeinen von einem die Walze teilweise umschlingenden Band in Form von Sieben, Filzen, Folien, Faserstoffbahnen o. ä. aus. Je nachdem, ob der Umschlingungsbereich in den konkaven oder konvexen Umfangsbereich des gebogenen Walzenrohres 3 führt, kann dabei die gewünschte Streckung oder Stauchung des Bandes erreicht werden.

In beiden Fällen verringert sich die Wandstärke des Walzenrohres 3 ausgehend vom Ende des mittleren Bereiches 1 zu den Enden des Walzenrohres 3 hin, wobei eine minimale Wandstärke ($s_{min}$) nicht unterschritten wird und die Wandstärke (s) zwischen der maximalen Wandstärke ($s_{max}$) am Ende des mittleren Bereiches 1 und der minimalen Wandstärke ($S_{min}$) höchstens

$$\left( \frac{\text{Abstand zwischen dem zu betrachtenden Punkt mit der Wandstärke (s) und dem Ende des Walzenrohres 3 (x)}}{\text{Abstand zwischen dem Ende des mittleren Bereiches 1 und dem Ende des Walzenrohres 3 (x*)}} \right)^2 \times \text{maximale Wandstärke } (s_{max})$$

ist.

Das Walzenrohr 3 besteht dabei aus einem faserverstärkten Kunststoff. Um den Grad der Verstärkung vom Ende des mittleren Bereiches 1 zu den Enden des Walzenrohres 3 hin zu verringern, wird der Winkel der aufgewickelten Fasern zur Umfangsrichtung betrachtet von den Enden des Walzenrohres 3 zum mittleren Bereich 1 hin vergrößert werden. Der Walzenträger 2 besteht aus Metall und hat zur Gewichtsreduzierung die Form eines Rohres.

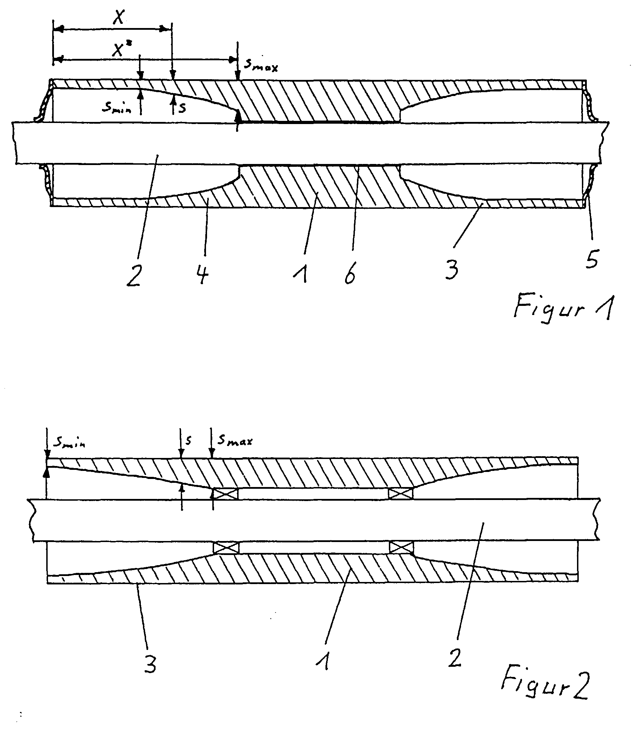

Bei der in Figur 2 gezeigten Walze ist das Walzenrohr 3 im mittleren Bereich 1 über zwei Lager rotierbar auf dem Walzenträger 2 gelagert. Außerdem verringert sich die Wandstärke s des Walzenrohres 3 ausgehend von dem Ende des mittleren Bereiches 1 zu den Enden des Walzenrohres 3 kontinuierlich.

Im Unterschied dazu ist das Walzenrohr 3 in Figur 1 im mittleren Bereich 1 mechanisch fest mit dem Walzenträger 2 verbunden, wobei der Walzenträger 2 rotierbar in einer nicht dargestellten Walzenstuhlung gelagert, ist. Die Wandstärke s des Walzenrohres 3 verringert sich dabei ausgehend vom Ende des mittleren Bereiches 1 zu den Enden des Walzenrohres 3 hin lediglich in einem Übergangsbereich 4. Darüber hinaus bleibt die Wandstärke s auf einem minimalen Wert konstant.

In Figur 1 ist das Walzenrohr 3 mit einer flexiblen Abdeckung 5 versehen, was vor Verschmutzung des Inneren schützt.

Das Walzenrohr 3 kann außerdem an seinen Enden bezüglich des Walzenträgers 2 geführt sein, so daß nur eine bestimmte radiale Bewegungsrichtung zwischen Walzenrohr 3 und Walzenträger 2 möglich ist. Des weiteren ist es möglich, zwischen den Enden des Walzenrohres 3 und dem Walzenträger 2 vorzugweise hydraulische Stützelemente anzuordnen, die so das Biegeverhalten des Walzenrohres 3 bezüglich des Walzenträgers 2 beeinflussen.

**Patentansprüche**

1. Walze, bestehend aus einem ausschließlich in einem axial mittleren Bereich (1) auf einem durchgehenden Walzenträger (2) zumindest in radialer Richtung abgestützten Walzenrohr (3), welches außerhalb dieses mittleren Bereiches (1) einen eine Biegung des Walzenrohres (2) relativ zum Walzenträger (3) erlaubenden Abstand zum Walzenträger (2) aufweist, **dadurch gekennzeichnet, daß**
sich die Steifigkeit des Walzenrohres (3) ausgehend von dem mittleren Bereich (1) zu den Enden des Walzenrohres (3) derart verringert, daß die Belastung durch das Eigengewicht des Walzenrohres (3) sowie die äußere Betriebsbelastung zu einer möglichst konstanten Krümmung der Biegelinie des Walzenrohres (3) führt.

2. Walze nach Anspruch 1, **dadurch gekennzeichnet, daß**
sich die Wandstärke (s) des Walzenrohres (3) ausgehend vom Ende des mittleren Bereiches (1) zu den Enden des Walzenrohres (3) hin vorzugsweise kontinuierlich verringert.

3. Walze nach Anspruch 1, **dadurch gekennzeichnet, daß**

sich die Wandstärke (s) des Walzenrohres (2) ausgehend vom Ende des mittleren Bereiches (1) zu den Enden des Walzenrohres (3) hin in einem Übergangsbereich (4) vorzugsweise kontinuierlich verringert.

4. Walze nach Anspruch 3, **dadurch gekennzeichnet, daß** die Wandstärke (s) des Walzenrohres (3) ausgehend vom Ende des Übergansbereiches (4) zu den Enden des Walzenrohres (3) hin konstant ist.

5. Walze nach einem der vorhergehenden Ansprüche **dadurch gekennzeichnet, daß** sich die Wandstärke (s) des Walzenrohres (3) ausgehend vom Ende des mittleren Bereiches (1) zu den Enden des Walzenrohres (3) hin verringert, wobei eine minimale Wandstärke ($s_{min}$) nicht unterschritten wird und die Wandstärke (s) zwischen der maximalen Wandstärke ($s_{max}$) am Ende des mittleren Bereiches (1) und der minimalen Wandstärke ($s_{min}$) höchstens

$$\left( \frac{\text{Abstand zwischen dem zu betrachtenden Punkt mit der \underline{Wandstärke (s) und dem Ende des Walzenrohres (3) (x)}}}{\text{Abstand zwischen dem Ende des mittleren Bereiches (1) und dem Ende des Walzenrohres (3) (x*)}} \right)^2 \times \text{maximale Wandstärke } (s_{max})$$

ist.

6. Walze nach einem der vorhergehenden Ansprüche, **dadurch gekennzeichnet, daß** das Walzenrohr (3) die Steifigkeit beeinflussende Teile enthält.

7. Walze nach einem der vorhergehenden Ansprüche, **dadurch gekennzeichnet, daß** das Walzenrohr (3) aus Kunststoff besteht.

8. Walze nach Anspruch 7, **dadurch gekennzeichnet, daß** der Kunststoff Verstärkungen aus Fasern, Geweben o. ä. enthält.

9. Walze nach Anspruch 8, **dadurch gekennzeichnet, daß** der Grad der Verstärkung in axialer Richtung vom Ende des mittleren Bereiches (1) zu den Enden des Walzenrohres (3) hin abnimmt.

10. Walze nach einem der vorhergehenden Ansprüche, **dadurch gekennzeichnet, daß** das Walzenrohr (3) im mittleren Bereich (1) mechanisch fest mit dem Walzenträger (2) verbunden ist und der Walzenträger (2) rotierbar in einer Walzenstuhlung gelagert ist.

11. Walze nach einem der vorhergehenden Ansprüche, **dadurch gekennzeichnet, daß** die Enden des Walzenrohres (3) eine flexible Abdeckung (5) besitzen.

12. Walze nach einem der Ansprüche 1 bis 9, **dadurch gekennzeichnet, daß** das Walzenrohr (3) im mittleren Bereich (1) rotierbar auf dem Walzenträger (2) gelagert ist.

Figur 1

Figur 2